# EUROPEAN PATENT APPLICATION

(11) **EP 4 707 748 A1**
(43) Date of publication of application: **11.03.2026**
(21) Application number: 23935695.9
(22) Date of filing: 17.08.2023
(51) Int. Cl.: G01D 5/347

(54) **MOTOR ENCODER WITH PROGRAMMABILITY AND HAPTIC FEEDBACK AND OPERATION METHOD THEREFOR**

(30) Priority: 04.05.2023 CN 202310485223
(71) Applicant: Defond Electech Co., Ltd, Dongguan, Guangdong 523000 (CN)
(72) Inventor: POON, Kai Kei, Dongguan, Guangdong 523000 (CN); LEE, Siu Hung, Dongguan, Guangdong 523000 (CN); LOW, Ho Kan, Dongguan, Guangdong 523000 (CN); CHAN, Ka Leung, Dongguan, Guangdong 523000 (CN); NIEH, Cheng Chen, Dongguan, Guangdong 523000 (CN)
(74) Representative: Metida
(86) International application number: PCT/CN2023/113499
(87) International publication number: WO 2024/227323

(57) **Abstract**

The present invention provides a motor encoder with a programmable and tactile feedback and an operation method thereof. The encoder includes: a rotary knob; a motor for providing virtual stopping, virtual termination and virtual elastic loading when the knob is turned, and generating a tactile feedback and resistance in different events; a position sensor for providing position information when the knob is started and in a movement process; a controller with a motor driver, wherein the controller is electrically connected with the motor and the position sensor respectively and used for obtaining a position feedback from the position sensor and driving the motor to form closed-loop torque feedback control; and an input interface electrically connected with the controller and used for inputting instruction information to the controller.

## Description

### FIELD OF TECHNOLOGY

The present invention relates to the technical field of encoders, and in particular to a motor encoder with a programmable and tactile feedback and an operation method thereof.

### BACKGROUND

An encoder is a device that compiles and converts signals or data into signal forms that can be used for communication, transmission and storage. The encoder converts an angular displacement or a linear displacement into an electrical signal. According to a read-out mode, the encoders can be divided into a contact type encoder and a non-contact type encoder; according to a working principle, the encoders can be divided into an incremental encoder and an absolute encoder. The incremental encoder converts the displacement into a periodic electrical signal, and then converts this electrical signal into a technical pulse, and the number of pulses indicates the magnitude of the displacement. Each position of the absolute encoder corresponds to one certain digital code, so its indication value is only related to starting and termination positions of measurement, regardless of an intermediate process of the measurement.

A traditional encoder usually consists of a rotating shaft or a disk with a slot or a contact. When the shaft rotates, the slot in the disk passes through the sensor, the sensor detects a change of the signal, the change of the signal generates output pulses, and the output pulses are counted to determine a position and speed of the shaft.

The traditional encoder adopts fixed and limited stopping mode, which lacks adjustability; in use, the feedback to a user is limited (usually only visual or auditory prompts); the control accuracy is low; it is more difficult for some users to use; more space is occupied; more moving parts are required, leading to potential wear; and the customizability is poor.

### SUMMARY

In view of the deficiencies in the prior art, it is an object of the present invention to provide a motor encoder with a programmable and tactile feedback and an operation method thereof.

In order to achieve the above purpose, the technical solution adopted by the present invention is as follows: a motor encoder with a programmable and tactile feedback, the motor encoder including:
a rotary knob;
a motor for providing virtual stopping, virtual termination and virtual elastic loading when the knob is turned, and generating a tactile feedback and resistance in different events;
a position sensor for providing position information when the knob is started and in a movement process;
a controller with a motor driver, wherein the controller is electrically connected with the motor and the position sensor respectively and used for obtaining a position feedback from the position sensor and driving the motor to form closed-loop torque feedback control; and
an input interface electrically connected with the controller and used for inputting instruction information to the controller.

Further, the input interface is a button/key on the knob, or a communication port capable of accepting external instructions.

Further, the motor is a brushless direct current motor or a stepping motor.

The present invention also provides an operation method of the motor encoder with a programmable and tactile feedback, the operation method including:
controlling a torque and a speed of a motor according to an electromagnetic state of the motor by adopting a magnetic field orientation control method; marking special operation modes onto a machine panel and a knob respectively;
first initializing, by a controller, a position of the knob, aligning a mark on the knob with a mark on the machine panel, and then configuring special operation modes with a virtual stopping position, a virtual termination position and intensity levels thereof; and
turning the knob to cause a magnetic field induced by a position sensor to change, reading, by the controller, the position sensor to acquire a current position of the knob, and then adjusting an output of a motor driver to perform required movement until the knob reaches a preset position.

Furthermore, the controller is also programmable to automatically turn the knob to the preset position according to a readback of the position sensor.

Further, the operation method also includes:
configuring, by the controller, a position or event that needs tactile feedback; and
when the knob is moved to the preset position or enters a pre-execution special event, controlling, by the controller, the motor to rotate forward and backward quickly to generate a tactile feedback, and finally, moving the knob back to the original position;

Furthermore, the controller is also capable of changing the intensity of a tactile activity by adjusting a moving distance and speed of the motor.

Furthermore, the controller is also programmable to have different tactile modes to provide different feedback feelings.

Another technical solution adopted by the present invention is as follows: a motor encoder with a programmable and tactile feedback, the motor encoder including:
a rotary knob;
a motor for providing virtual stopping, virtual termination and virtual elastic loading when the knob is turned, and generating a tactile feedback and resistance in different events;
a position sensor for providing position information when the knob is started and in a movement process;
a controller with a motor driver, wherein the controller is electrically connected with the motor and the position sensor respectively and used for obtaining a position feedback from the position sensor and driving the motor to form closed-loop torque feedback control; and
an input interface electrically connected with the controller and used for inputting instruction information to the controller; and
a display output module electrically connected with the controller and used for displaying or outputting a state of the knob.

Further, the display output module is a display screen, an LED indicator lamp or a communication port.

Further, the input interface is the display screen in the display output module.

Further, the input interface is a button/key or a communication port capable of accepting external instructions.

Further, the motor is a brushless direct current motor or a stepping motor.

The present invention also provides an operation method of the motor encoder with a programmable and tactile feedback, the operation method including:
controlling a torque and a speed of a motor according to an electromagnetic state of the motor by adopting a magnetic field orientation control method;
first initializing, by the controller, a position of the knob, and configuring operation modes with a virtual stopping position, a virtual termination position and intensity levels thereof, and then displaying settings and corresponding marks on the display screen; and
turning the knob to cause a magnetic field induced by the position sensor to change, reading, by the controller, the position sensor to acquire a current position of the knob, then adjusting an output of the motor driver to perform required movement until the knob reaches a preset position, and, meanwhile, displaying a current state of the knob by the display screen.

Furthermore, the controller is also programmable to automatically turn the knob to the preset position according to a readback of the position sensor.

Further, the operation method also includes:
configuring, by the controller, a position or event that needs tactile feedback; and
when the knob is moved to the preset position or enters a pre-execution special event, controlling, by the controller, the motor to rotate forward and backward quickly to generate a tactile feedback, and finally, moving the knob back to the original position;

Furthermore, the controller is also capable of changing the intensity of a tactile activity of the motor by adjusting a moving distance and speed of the motor.

Furthermore, the controller is also programmable to have different tactile modes to provide different feedback feelings.

The present invention has the following beneficial effects: compared with the traditional encoder, the motor encoder provided by the present invention has a dynamic programmable coding mode which can instantly change an input mode, and also has a dynamic programmable tactile feedback which can instantly feed back a torque/repulsion force to a user, thereby achieving a more intuitive and customizable user experience.

The motor encoder of the present invention has the following advantages: the feedback to the user is enhanced through the programmable and tactile feedback; more precise control is realized; the motor encoder is easier to use for some users; the motor encoder can be integrated into a single component to save space; fewer moving parts are required, so that the durability is improved and the maintenance cost is reduced; the motor encoder can be highly customized for specific application scenarios or users.

### BRIEF DESCRIPTION OF THE DRAWINGS

FIG. 1 is a perspective view of a motor encoder of the present invention.
FIG. 2 is a top view of the motor encoder of the present invention.
FIG. 3 is a sectional view of the motor encoder of the present invention.
FIG. 4 is an exploded perspective view of the motor encoder of the present invention.
FIG. 5 is a structural schematic diagram of a working principle of the motor encoder of the present invention.
FIG. 6 is a flow diagram of an operation method of the motor encoder of the present invention.

In the drawings: 1- base, 2- knob, 3- display output module, 4- controller, 5-motor, 6- position sensor, 7- motor driver, 8- input interface.

### DESCRIPTION OF THE EMBODIMENTS

In order to facilitate the understanding of those skilled in the art, the present invention will be further described in detail with reference to the attached drawings and specific embodiments.

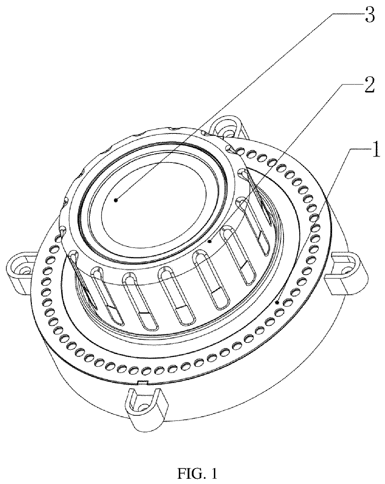

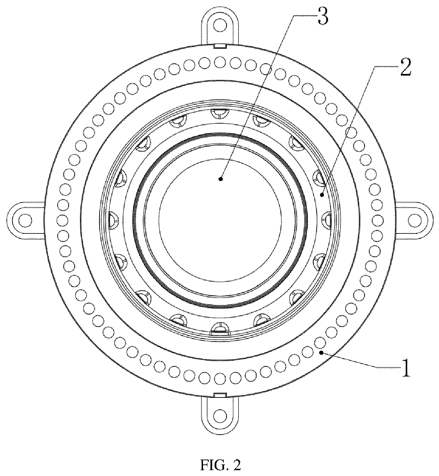

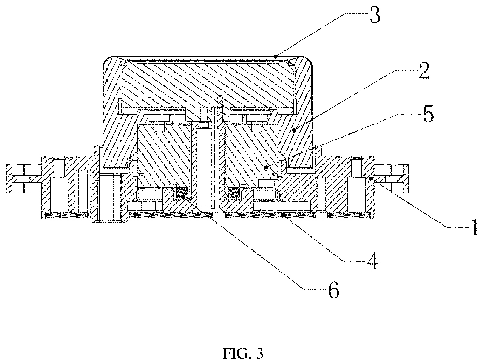

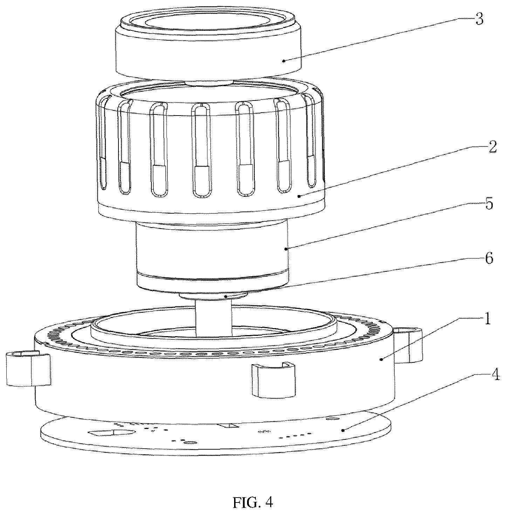

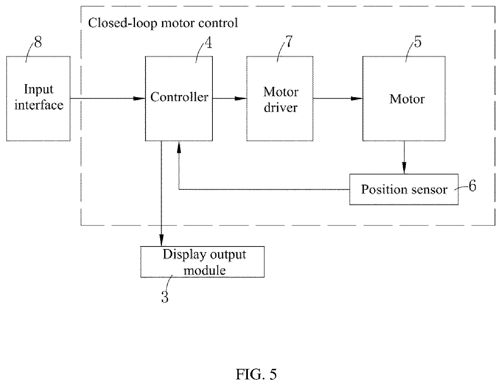

Referring to FIGs. 1 to 5, the present invention provides a motor encoder with a programmable and tactile feedback. The encoder includes: a rotary knob 2; a motor 5 for providing virtual stopping, virtual termination and virtual elastic loading when the knob 2 is turned, and generating a tactile feedback and resistance in different events; a position sensor 6 for providing position information when the knob 2 is started and in a movement process; a controller 4 with a motor driver 7, where the controller is electrically connected with the motor 5 and the position sensor 6 respectively and used for obtaining a position feedback from the position sensor 6 and driving the motor 5 to form closed-loop torque feedback control; and an input interface 8 electrically connected with the controller 4 and used for inputting instruction information to the controller 4.

In some embodiments, the motor encoder may also be configured with a display output module 3 electrically connected with the controller 4 and used for displaying or outputting a state of the knob 2. In order to better display feedback information, the display output module 3 is a display screen which is an LED, LCD, OLED or AMOLED. Certainly, in a practical application process, the display output module 3 may also be an LED indicator lamp or a communication port.

In order to reduce moving parts, the motor encoder is installed on an annular base 1, the controller 4 (PCB in this embodiment) is embedded in a bottom of the base 1, the knob 2 is rotatably connected to a top of the base 1, a bottom of the motor 5 is embedded into an inner cavity of the base 1, a top of the motor 5 is embedded in an inner cavity of a bottom of the knob 2, the position sensor 6 is installed in the inner cavity of the base 1, and the display output module 3 is installed in an inner cavity of a top of the knob 2.

When the motor encoder is not equipped with the display output module 3, the input interface 8 is a button/key, or a communication port capable of accepting external instructions. When the motor encoder is equipped with the display output module 3, the input interface 8 may be a display screen (touch screen) in the display output module 3 in addition to the above types. The button/key may be disposed on the motor encoder, on the knob 2 or on other positions, and any obvious substitution is within the protection scope of the present invention without departing from the concept of the present invention.

In this embodiment, the motor 5 is a brushless direct current motor or a stepping motor. Other types of motors 5 may also be adopted as the motor 5, and any obvious substitution is within the protection scope of the present invention without departing from the concept of the present invention.

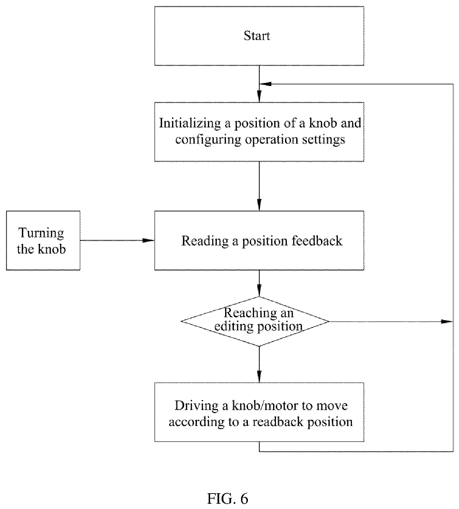

Referring to FIG. 6, this embodiment also provides an operation method of the motor encoder with a programmable and tactile feedback, which is slightly different depending on whether the display output module 3 is configured.
1. An operation method of the motor encoder without the display output module 3 includes: controlling a torque and speed of a motor 5 according to an electromagnetic state by adopting a magnetic field orientation control method; marking special operation modes onto a machine panel and a knob 2 respectively; first initializing, by a controller 4, a position of the knob 2, aligning a mark on the knob 2 with a mark on the machine panel, and then configuring special operation modes with a virtual stopping position, a virtual termination position and intensity levels thereof; and turning the knob 2 to cause a magnetic field induced by a position sensor 6 to change, reading, by the controller 4, the position sensor 6 to acquire a current position of the knob 2, and then adjusting an output of a motor driver 7 to perform required movement until the knob 2 reaches a preset position. The controller 4 is also programmable to automatically turn the knob 2 to the preset position according to a readback of the position sensor 6.
2. An operation method of the motor encoder with the display output module 3 includes: controlling a torque and speed of a motor 5 according to an electromagnetic state by adopting a magnetic field orientation control method; first initializing, by a controller 4, a position of the knob 2, and then configuring operation modes with a virtual stopping position, a virtual termination position and intensity levels thereof, and then displaying settings and corresponding marks on the display; turning the knob 2 to cause a magnetic field induced by a position sensor 6 to change, reading, by the controller 4, the position sensor 6 to acquire a current position of the knob 2, and then adjusting an output of a motor driver 7 to perform required movement until the knob 2 reaches a preset position, and, meanwhile, displaying a current state of the knob 2 by the display screen. The controller 4 is also programmable to automatically turn the knob 2 to the preset position according to a readback of the position sensor 6.
3. The above operation method further includes: configuring, by the controller 4, a position or event that needs tactile feedback; when the knob 2 is moved to the preset position or enters a pre-execution special event, controlling, by the controller 4, the motor 5 to rotate forward and backward quickly to generate a tactile feedback, and finally, moving the knob 2 back to the original position. The controller 4 is also capable of changing the intensity of a tactile activity by adjusting a moving distance and speed of the motor 5; the controller 4 is also programmable to have different tactile modes to provide different feedback feelings.

To sum up, compared with the traditional encoder, the novel encoder in this solution provides excellent user experience and improved functions, and is also programmable to provide various tactile feedback profiles, thus achieving a more intuitive and customizable user experience. The tactile feedback profiles can be customized for specific applications, for example, industrial control, intelligent home control, surgical robot control and other interface applications, to provide accurate and reliable user input and feedback. The integrated programmable coding module can be used in various applications to provide excellent performance, usability and customizability, and can be integrated into various types of devices, including household appliances, medical devices, industrial devices, etc.

For example, household appliance applications include but are not limited to the following examples:
Oven: it can be used to control a temperature or time setting of the oven, and the tactile feedback can provide a user with a clear indication of the selected temperature or time, making the oven easier to use and producing a more accurate cooking experience;
Washing machine: it can be used to control various settings on the washing machine, for example, a cycle type, a water temperature and a rotation speed. Tactile feedback can provide the user with the clear indication of the selected setting, resulting in a more intuitive and user-friendly experience.
Refrigerator: it can be used to control a temperature setting of the refrigerator; with multiple stopping positions, the temperature can be controlled more accurately, and the tactile feedback can provide the user with a clear indication of the selected temperature.
Air conditioner: it can be used to control temperature and fan speed settings of the air conditioner, and the tactile feedback can provide the user with a clear indication of the selected setting, resulting in a more intuitive and user-friendly experience.

It will be apparent to those skilled in the art that various changes and modifications may be made in the present invention without departing from the spirit and scope of the present invention. Thus, if such modifications and variations of the present invention fall within the scope of the claims of the present invention and their equivalents, the present invention is intended to include such modifications and variations.

## Claims

1. A motor encoder with a programmable and tactile feedback, wherein the motor encoder comprises:
a rotary knob;
a motor for providing virtual stopping, virtual termination and virtual elastic loading when the knob is turned, and generating a tactile feedback and resistance in different events;
a position sensor for providing position information when the knob is started and in a movement process;
a controller with a motor driver, wherein the controller is electrically connected with the motor and the position sensor respectively and used for obtaining a position feedback from the position sensor and driving the motor to form closed-loop torque feedback control; and
an input interface electrically connected with the controller and used for inputting instruction information to the controller.

2. The motor encoder with a programmable and tactile feedback according to claim 1, wherein the input interface is a button/key or a communication port capable of accepting external instructions.

3. The motor encoder with a programmable and tactile feedback according to claim **1,** wherein the motor is a brushless direct current motor or a stepping motor.

4. The motor encoder with a programmable and tactile feedback, wherein the motor encoder comprises:
a rotary knob;
a motor for providing virtual stopping, virtual termination and virtual elastic loading when the knob is turned, and generating a tactile feedback and resistance in different events;
a position sensor for providing position information when the knob is started and in a movement process;
a controller with a motor driver, wherein the controller is electrically connected with the motor and the position sensor respectively and used for obtaining a position feedback from the position sensor and driving the motor to form closed-loop torque feedback control; and
an input interface electrically connected with the controller and used for inputting instruction information to the controller; and
a display output module electrically connected with the controller and used for displaying or outputting a state of the knob.

5. The motor encoder with a programmable and tactile feedback according to claim 4, wherein the display output module is a display screen, an LED indicator lamp or a communication port.

6. The motor encoder with a programmable and tactile feedback according to claim 5, wherein the input interface is the display screen in the display output module.

7. The motor encoder with a programmable and tactile feedback according to claim 4, wherein the input interface is a button/key or a communication port capable of accepting external instructions.

8. The motor encoder with a programmable and tactile feedback according to claim 4, wherein the motor is a brushless direct current motor or a stepping motor.

9. An operation method of the motor encoder with a programmable and tactile feedback according to claim 1, wherein the operation method comprises:
controlling a torque and a speed of a motor according to an electromagnetic state of the motor by adopting a magnetic field orientation control method;
marking special operation modes onto a machine panel and a knob respectively;
first initializing, by a controller, a position of the knob, aligning a mark on the knob with a mark on the machine panel, and then configuring special operation modes with a virtual stopping position, a virtual termination position and intensity levels thereof; and
turning the knob to cause a magnetic field induced by a position sensor to change, reading, by the controller, the position sensor to acquire a current position of the knob, and then adjusting an output of a motor driver to perform required movement until the knob reaches a preset position.

10. The operation method of the motor encoder with a programmable and tactile feedback according to claim 9, wherein the controller is also programmable to automatically turn the knob to the preset position according to a readback of the position sensor.

11. The operation method of the motor encoder with a programmable and tactile feedback according to claim 9, wherein the operation method further comprises:
configuring, by the controller, a position or event that needs tactile feedback; and
when the knob is moved to the preset position or enters a pre-execution special event, controlling, by the controller, the motor to rotate forward and backward quickly to generate a tactile feedback, and finally, moving the knob back to the original position.

12. The operation method of the motor encoder with a programmable and tactile feedback according to claim 11, wherein the controller is also capable of changing the intensity of a tactile activity by adjusting a moving distance and speed of the motor.

13. The operation method of the motor encoder with a programmable and tactile feedback according to claim 11, wherein the controller is also programmable to have different tactile modes to provide different feedback feelings.

14. The operation method of the motor encoder with a programmable and tactile feedback according to claim 4, wherein the operation method comprises:
controlling a torque and a speed of a motor according to an electromagnetic state of the motor by adopting a magnetic field orientation control method;
first initializing, by the controller, a position of the knob, and configuring operation modes with a virtual stopping position, a virtual termination position and intensity levels thereof, and then displaying settings and corresponding marks on the display screen; and
turning the knob to cause a magnetic field induced by the position sensor to change, reading, by the controller, the position sensor to acquire a current position of the knob, then adjusting an output of the motor driver to perform required movement until the knob reaches a preset position, and, meanwhile, displaying a current state of the knob by the display screen.

15. The operation method of the motor encoder with a programmable and tactile feedback according to claim 14, wherein the controller is also programmable to automatically turn the knob to the preset position according to a readback of the position sensor.

16. The operation method of the motor encoder with a programmable and tactile feedback according to claim 14, wherein the operation method further comprises:
configuring, by the controller, a position or event that needs tactile feedback; and
when the knob is moved to the preset position or enters a pre-execution special event, controlling, by the controller, the motor to rotate forward and backward quickly to generate a tactile feedback, and finally, moving the knob back to the original position.

17. The operation method of the motor encoder with a programmable and tactile feedback according to claim 16, wherein the controller is also capable of changing the intensity of a tactile activity of the motor by adjusting a moving distance and speed of the motor.

18. The operation method of the motor encoder with a programmable and tactile feedback according to claim 16, wherein the controller is also programmable to have different tactile modes to provide different feedback feelings.
